# EUROPEAN PATENT APPLICATION

(11) **EP 1 301 045 A1**
(43) Date of publication of application: **09.04.2003**
(21) Application number: 01123649.4
(22) Date of filing: 02.10.2001
(51) Int. Cl.: H04N 9/82

(54) **Image recording system, notably video camera, post processing device for such a system and cartridge associated therewith**

(71) Applicant: Broadcast Television Systems Cameras B.V., 4827 HG Breda (NL)
(72) Inventor: Van Rooy, Johannes, 5235 EM's Hertogenbosch (NL)
(74) Representative: Bonnans, Arnaud

(57) **Abstract**

An image recording system is proposed, which comprises an image sensing device (2) generating analog signals, a pre-processing stage (4) outputting a first digital stream based on said analog signals, a processing stage (8) for modifying said first digital stream into a second digital stream according to at least one parameter and recording means (6, 14) for recording said first digital stream as main data and for recording said parameter as metadata.

The invention also proposes a post-processing device for such a system and a carridge associated therewith.

## Description

The invention relates to an image recording system, notably a video camera, to a post processing device for such a system and to a cartridge associated therewith.

Image recording systems like cameras generally comprise an image sensing device, for instance a CCD associated with an optical system, in order to capture the field facing the camera in the form of analog signals.

The analog signals are then processed in the camera into video signals to be recorded. Signal processing is realised according to parameters which value is controlled by the camera user.

It has already been proposed, as described in patent application EP 0 667 709, to record the signal processing parameters as metadata, together with the video signals as main data.

The inventor of the present invention finds the interest of this metadata information limited when used with a video signal recorded with prior art cameras as described above, because most of the choices made by the camera user are irreversible once the signal has been processed.

To get rid of these limitations, the inventor proposes an image recording system comprising an image sensing device generating analog signals, a pre-processing stage outputting a first digital stream based on said analog signals, a processing stage for modifying said first digital stream into a second digital stream according to at least one parameter and recording means for recording said first digital stream as main data and for recording said parameter as metadata.

In prefered embodiments :
- the system further comprises a viewing device for displaying a video sequence represented by said second digital stream ;
- the system further comprises a user interface for modifying the value of said parameter;
- said recording means is a recording device able to record on a magnetic or optical medium ;
- said recording means is a solid-state memory ;
- said memory is carried by a removable cartridge.

The invention also proposes a postprocessing device comprising reproducing means for reading a first digital stream and at least a first value of a parameter embedded in the first digital stream as metadata and a processing stage able to use said first value for producing a video digital stream based on said first digital stream.

According to prefered embodiments :
- the device comprises a user interface for entering a second value of the parameter and said processing stage is able to use said second value for producing a video digital stream based on said first digital stream ;
- said reproducing means is a reproducing device able to read on a magnetic or optical medium;
- said reproducing means is a solid-state memory ;
- said memory is carried by a removable cartridge.

The invention also proposes a cartridge comprising a memory for storing a first digital stream and at least a parameter embedded in the first digital stream as metadata and a processing circuit using the parameter for producing a video digital stream based on said first digital stream.

Preferably, the cartridge has an input bus for receiving said first digital stream, an output bus for emitting said video digital stream, and/or a communication port for connection with a user interface.

Other aspects of the invention will also appear in the following description of embodiments of the invention made in the light of the following figures, where :
- figure 1 represents the main circuits of a digital video camera in a first embodiment of the invention ;
- figure 2 represents the main circuits of a data retrieving device for the camera of figure 1;
- figure 3 represents the main circuits of a digital video camera in a second embodiment of the invention ;
- figure 4 represents the main circuits of a video camera in a third embodiment of the invention;
- figure 5 represents the main circuits of a video player in the third embodiment;
- figure 6 represents a cartridge in the third embodiment.

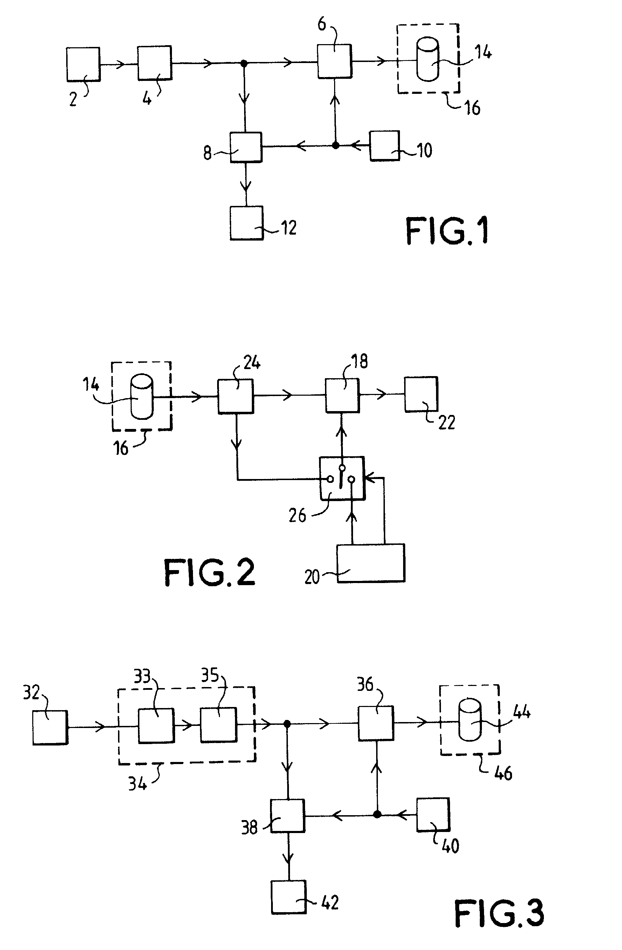

A first embodiment of the invention as a digital video camera is represented at figure 1. An image sensing device 2, mainly comprising 3 CCD (one for each RGB colour), outputs analog signals to a digital conversion stage 4. The digital conversion stage 4 (or pre-processing stage) has 3 analog-to-digital converters (A/D converters), each associated with a corresponding CCD. Each A/D converter covers the full dynamic range of the corresponding CCD. Each A/D converter thus outputs digital samples, for instance on 14 bits, representing the light received by each pixel of the corresponding CCD.

The combination of the 3 A/D converters, realising in the present embodiment the digital conversion stage, consequently outputs a raw light digital stream corresponding to the analog signals output from the CCD.

The raw light digital stream is transmitted on the one hand to a recording device 6 and on the other hand to a processing stage 8. The processing stage 8 allows the raw light digital stream to undergo signal processing as in conventional cameras, for instance gamma correction, sharpness correction, etc. The various signal processing steps apply a given transfer function to the digital stream. Each transfer function can be controlled by parameters set by the camera user through a user interface 10.

The raw light digital stream is transformed into a video digital stream by the processing stage 8. The video digital stream and thus the look of the video sequence it represents are dependent upon the parameters set by the camera user through the user interface 10.

The video digital stream is eventually transmitted to a display 12 where the corresponding video sequence can be viewed by the camera user, the look of the video sequence on the display 12 directly depending on the parameters set by the camera user.

The parameters generated by the user interface 10 in order to control the processing stage 8 (i.e. the camera settings) are also transmitted to the recording device 6.

The recording device 6 receives the raw light digital stream as previously indicated and parameters of the processing stage 8 as just mentioned.

The recording device 6 has a multiplexer in order to embed data representing these parameters (i.e. the camera settings) in the raw light digital stream. The embedded data corresponding to the parameters of the processing stage 8 are metadata added to the main data representing the raw light information. The recording device then records the digital stream including metadata to a memory 14, which can be for instance a random-access memory (RAM) in a cartridge 16.

Figure 2 illustrates a device for retrieving data stored by the camera of figure 1 and for displaying a corresponding video sequence.

The device of figure 2 has a playback device 24 for reading a previously-recorded digital stream from the RAM 14 of the cartridge 16 and for separating from this digital stream a main stream and metadata included during recording, as previously explained.

The main stream is transmitted from the playback device 24 to a processing stage 18, which provides signal processing operations similar to the ones realised by the processing stage 8 of the camera of figure 1. Upon selection by the user through a user interface 20, the parameters of the processing stage 18 can be set to the value indicated by the metadata (i.e. the values they had while recording) or to values chosen by the user of the device (and entered via the user interface 20). This alternative is schematically represented on figure 2 by a switch 26 commandable by user interface 20 to input metadata from playback device 24 or user data from user interface 20 as parameters for the processing stage 18. Preferably, this choice can be made for each parameter.

Based on the main stream (which represents raw light data), the processing stage 18 generates a video digital stream which can be viewed on a display 22. The appearance or look of the video sequence represented by the video digital stream will depend on the parameters of the processing stage 18. Consequently, depending on the device user (for instance a director of photography), the look of the video sequence can be identical to the look chosen during recording by the camera user or modified. By using unprocessed data from memory 14, the variation of the look can be made in a much greater range than previously.

According to an advantageous variation, the newly-introduced parameters (from user interface 20) can be recorded to the memory 14 as another set of metadata. By so proceeding, multiple sets of metadata representing different looks of the video material can be stored, which is far more efficient than storing several versions of processed video.

Figure 3 represents a digital video camera according to a second embodiment of the invention. An image sensing device 32, mainly comprising CCDs, generates analog signals (representing an image) which are digitised by analog-to-digital converters 33 (which can be embedded on the same chip as the image sensing device 32) and then processed by a logarithmic converter 35. The logarithmic converter thus outputs a raw digital stream, which is not linear in light as in the first embodiment but linear in perception. The combination of analog-to-digital converters 33 and logarithmic converter 35 constitutes a non-linear digital conversion stage or pre-processing stage 34 outputting the raw digital stream.

The raw digital stream is transmitted to a recording device 36 where it is recorded to a memory 44 (preferably a RAM ; a recordable disc, a tape or any other medium could also be used). The memory 44 is affixed to a cartridge 46.

The raw digital stream also passes through a processing stage 38 to be transformed into a viewable video digital stream to be displayed on a viewing device 42. The value of the parameters involved in the processing stage 38 is set by the camera user via a user interface 40 and simultaneously recorded on the memory 44 by the recording device 36 as metadata to the raw digital stream.

A postprocessing device adapted to the camera of figure 3 can be realised with the explanations relative to figure 2.

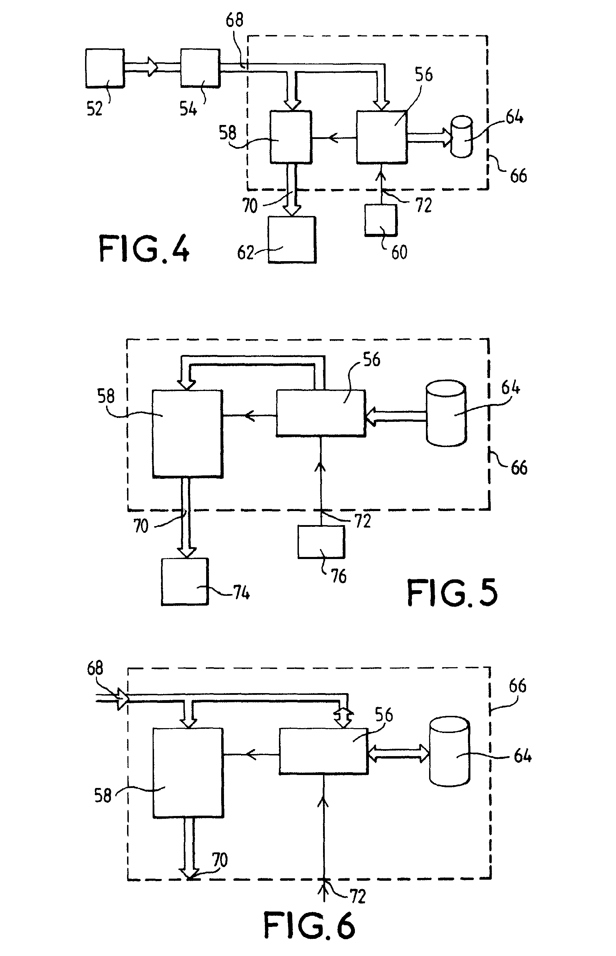

Figures 4 to 6 represent a third embodiment of the invention. A video camera represented on figure 4 has an image sensing device 52 which outputs analog signals representing images to a pre-processing stage 54. Based on these analog signals, the pre-processing stage 54 generates a raw digital stream and outputs it to an input bus 68 (e.g. HD-SDI) of a removable cartridge 66. The digital stream on the input bus 68 is forwarded to a processing circuit 58 included in the cartridge 66 and to a cartridge controller 56 which is also included in the cartridge 66. The cartridge controller 56 provides for recording (or writing) the incoming raw digital stream in a memory 64, preferably a solid-state memory, for instance a RAM, also carried by the cartridge 66.

The cartridge controller 56 is also linked to a user-interface 60 of the video camera via a serial port 72 (for instance RS232 I/O). Parameters controlling signal processing realised in the processing circuit 58 are sent from the user-interface 60 to the cartridge controller 56 via this serial port 72 and forwarded to the processing circuit 58 by the cartridge controller 56.

The raw digital stream received by the processing circuit 58 is processed depending on the parameters from the user interface 60, thus transformed into a video digital stream forwarded by the processing circuit 58 to a display 62 by an output bus 70 of the cartridge 66.

The cartridge controller 56 also writes the parameters to the memory 64 as metadata accompanying the raw digital stream. Operation of the video camera of figure 4 is thus similar to operation in previous embodiments. As can be noted however, the processing circuit 58 is carried by the same removable cartridge as the memory 64.

A video player as represented in figure 5 then receives the removable cartridge 66 whereby connection is made between the output bus 70 of the cartridge 66 and a display device 74 on the one hand, and between the serial port 72 of the cartridge 66 and a user interface 76 on the other hand.

Upon commands coming from the user interface 76, the cartridge controller 56 allows transfer of the raw data recorded in the memory 64 to the processing circuit 58 as a reproduced raw digital stream.

The cartridge controller 56 is also able to retrieve the parameters recorded as metadata in the memory 64. Depending on a command from the user emitted from user interface 76 on the serial port 72, the cartridge controller 56 will alternatively forward to the processing circuit 56 the retrieved parameters (metadata) or newly defined parameters which are also received via the serial port 72. As indicated in relation with the previous embodiments, the choice between a parameter recorded as metadata and a newly-defined parameter can advantageously be made by the user for each parameter controlling the processing circuit 58.

In accordance with the chosen parameters, the reproduced raw digital stream will be processed by the processing circuit 58 and output as a video digital stream to output bus 70 where it can be caught by display device 74 for viewing. Alternatively or in addition, the video digital stream on output bus 70 can be transmitted to a recording apparatus to be recorded in a conventional way.

As clear from the figures, the solution of this third embodiment allows to save one processing circuit (as the processing circuit of the cartridge is used in the camera and in the player) and furthermore ensures that the same processing circuit is used both in the camera and in the player, thus ensuring the video sequence has the same look (or appearance) when the metadata are used as parameters for the processing circuit.

Figure 6 represents the cartridge 66 with its input bus 68, the output bus 70 and its serial port 72. The processing circuit 58 is connected to the output bus 68 to receive the raw digital stream. The processing circuit 58 is also connected to the output bus 70 to emit the video digital stream. The processing circuit 58 is connected to the cartridge controller 56 via a bus (which is preferably identical to the input bus 68) in order to receive the raw digital stream from the memory 64 during playback (i.e. reproduction from the memory 64).

Lastly, the processing circuit 58 is connected to the cartridge controller 56 via a serial connection so that the cartridge controller 56 can send parameters for processing to the processing circuit 58.

The cartridge controller 56 is connected to the input bus 68 to receive the raw digital stream. The cartridge controller 56 is also connected to the memory 64 via a bi-directional bus in order to store the raw digital stream to the memory 64 and to retrieve the raw digital stream from the memory 64. The cartridge controller 56 is connected to the serial port 72 to receive processing parameters and, when the cartridge is mounted in a player, commands indicating for each parameter whether metadata or user-defined parameter should be used. The cartridge controller 56 has the ability to store the parameters received from the serial port 72 as metadata in the raw digital stream and to retrieve these metadata to possibly use them as processing parameters when reproducing the raw digital stream from the memory 64.

The invention is not limited to the above embodiments. For instance, it can be proposed that an image recording system according to the invention not only records the raw digital stream as indicated above (datamode) but also the video digital stream (videomode) as conventional.

It is also possible to store the metadata and main data (or essence) separately (even on different devices) as long as main data and metadata refer to each other.

Of course, as a video camera generally provides not only recording but also playing-back facilities, the camera can be used as a post-processing device where the same controls are used to change the processing parameters during playing back and recording.

The image recording system could also be a camera with separate recording device linked to the camera by a cable or wireless transmission.

## Claims

1. Image recording system comprising :
- an image sensing device (2 ; 32 ; 52) generating analog signals ;
- a pre-processing stage (4 ; 34 ; 54) outputting a first digital stream based on said analog signals ;
- a processing stage (8 ; 38 ; 58) for modifying said first digital stream into a second digital stream according to at least one parameter;
- recording means (6, 14 ; 36, 44 ; 64) for recording said first digital stream as main data and for recording said parameter as metadata.

2. System according to claim 1 further comprising a viewing device (12 ; 42 ; 62) for displaying a video sequence represented by said second digital stream.

3. System according to claim 1 or 2, further comprising a user interface (10 ; 40 ; 60) for modifying the value of said parameter.

4. System according to any of claims 1 to 3, wherein said recording means is a recording device able to record on a magnetic or optical medium.

5. System according to any of claims 1 to 3, wherein said recording means is a solid-state memory (14 ; 44 ; 64).

6. System according to claim 5, wherein said memory is carried by a removable cartridge (16 ; 46 ; 66).

7. Postprocessing device comprising :
- reproducing means (24 ; 56) for reading a first digital stream and at least a first value of a parameter embedded in the first digital stream as metadata ;
- a processing stage (18 ; 58) able to use said first value for producing a video digital stream based on said first digital stream.

8. Post-processing device according to claim 7, further comprising a user interface (20, 76) for entering a second value of the parameter, wherein said processing stage (18 ; 58) is able to use said second value for producing a video digital stream based on said first digital stream.

9. Post-processing device according to claim 7 or 8, wherein said reproducing means is a reproducing device able to read on a magnetic or optical medium.

10. Post-processing device according to claim 7 or 8, wherein said reproducing means is a solid-state memory (14 ; 64).

11. Post-processing device according to claim 10, wherein said memory is carried by a removable cartridge (16 ; 66).

12. Cartridge comprising
- a memory (64) for storing a first digital stream and at least a parameter embedded in the first digital stream as metadata ;
- a processing circuit (58) using the parameter for producing a video digital stream based on said first digital stream.

13. Cartridge according to claim 12, with an input bus (68) for receiving said first digital stream.

14. Cartridge according to claim 12 or 13, with an output bus (70) for emitting said video digital stream.

15. Cartridge according to claim 12 to 14, with a communication port (72) for connection with a user interface.
